# EUROPEAN PATENT SPECIFICATION

(11) **EP 1 897 924 B1**
(45) Date of publication and mention of the grant of the patent: **06.05.2009**
(21) Application number: 07253581.8
(22) Date of filing: 10.09.2007
(51) Int. Cl.: C09D 201/02, C09D 171/02

(54) **Protective coating containing acetylene compound**
Schutzbeschichtung mit Acetylen-Verbindung
Revêtement protecteur contenant un composé acétylène

(30) Priority: 08.09.2006 JP 2006243773
(43) Date of publication of application: 12.03.2008
(73) Proprietor: Nissin Chemical Industry Co., Ltd., Echizen-shi, Fukui-ken (JP)
(72) Inventor: Mizusaki, Toru, c/o Nissin Chem. Industry Co., Ltd., Echizen-shi Fukui-ken (JP); Shinohara, Shuichiro, c/o Nissin Chem. Industry Co.,Ltd., Echizen-shi Fukui-ken (JP)
(74) Representative: Stoner, Gerard Patrick

(56) References cited:
- JP-A- 5 140 491
- JP-A- 7 315 888
- JP-A- 2005 146 159
- US-A1- 2003 078 307

## Description

This invention relates to a protective coating containing an acetylene compound, and more specifically, to a protective coating which is effective for use in the applications such as building materials, building exterior materials, and automobiles, and which exhibits excellent adhesion and water resistance.

### BACKGROUND

A protective coating is required to have various different properties depending on the intended application of the layer. For example, a protective coating used as a building material or building exterior material is required to exhibit good adhesion and corrosion resistance, and in some cases, a high heat resistance and capability of adhering to other substrates.

The building material industry is currently experiencing switchover from protective materials using an organic solvent to those using water in view of reducing the use of volatile organic compounds (VOC).

A protective coating formed by using a water-borne resin, however, had the problem of inferior initial water resistance compared to the protective material prepared by using an organic solvent. Accordingly, such protective coating often suffered from peeling and other problems when the protective coating experienced a high humidity condition, for example, a rainfall immediately after the coating. In view of such situation, an attempt has recently made to improve the water resistance of the water-borne protective coating by reacting acidic functional group of the anionic water-borne resin with an oxylane group-containing compound to thereby leave no hydrophilic group. This protective coating was still insufficient in its initial water resistance immediately after the coating.

USP 3,464,946 (Patent Document 1) and USP 3,444,114 (Patent Document 2) disclose an alkyl etherified amino resin which has been converted by reaction with an oxycarboxylic acid to enable its use in water-borne composition. These attempts, however, failed to solve the problem of the water resistance.

JP-B 8-32851 (Patent Document 3) discloses a two part-type water-borne coating composition which is cured with isocyanate. This composition is still insufficient in the water resistance.

Accordingly, there is a need for development of a protective coating which exhibits improved properties such as water resistance and adhesion.

Lead salt pigments such as minium, lead cyanamide, and calcium metaplumbate, and metal chromate pigments such as basic zinc chromate and strontium chromate had once been the main reagent used for coating composition of an automobile. Use of such reagent, however, was gradually restricted in consideration of the health hazard and environmental conservation. Since then, non-polluting, non-toxic rust preventive pigments have been developed. Exemplary such rust preventive pigments include metal phosphates such as zinc phosphate, calcium magnesium phosphate, titanium phosphate, and silica phosphate; condensed metal phosphates such as aluminum tripolyphosphate; metal phosphorite such as zinc phosphorite, calcium phosphorite, strontium phosphorite, and aluminum phosphorite; zinc molybdate, calcium molybdate, barium borate, and zinc borate. These non-polluting, non-toxic pigments, however, failed to exhibit performance comparable to that of the lead salt pigments and chromate pigments.

JP-A 5-140491 (Patent Document 4) discloses a water-borne etch-resistant coating composition for a metal plate produced by adding a surfactant and an acetylene alcohol compound and/or an acetylene glycol compound. In this coating composition, the uniform distribution of the resin component on the metal surface is enabled by the use of the surfactant and the acetylene alcohol compound and/or the acetylene glycol compound, and it is the resin that realizes the etch-resistance.

JP-A 2000-104015 (Patent Document 5) discloses a thermosetting coating composition comprising a water-borne polyurethane resin having the thermosetting property. Use of the urethane resin, however, is associated with the drawback of insufficient light resistance and high cost.

In view of the situation as described above, one aim of the present proposals is to provide new and useful protective coatings which are
adapted for use in applications such as building materials, building exterior materials, and automobiles, and which exhibits excellent adhesion and water resistance when used as a building material or building exterior material, and excellent protective performance when used for an automobile.

The inventors of the present invention made an intensive study to realize the objects as described above, and found that the protective coating prepared by blending the synthetic resin as described below which constitutes the base of the coating composition with a mixture of an acetylene glycol surfactant and a polyoxyalkylene alkyl ether having an HLB of a particular range or a sulfur-containing surfactant exhibits an excellent adhesion to various types of underlying substrates and protective performance including water resistance, and such protective coating capable of solving the prior art problems as described above are particularly useful as a protective coating for use in the applications including building materials, building exterior materials, and automobiles. The present invention has been completed on the basis of such finding.

Accordingly, the present invention provides a protective coating containing an acetylene compound as described below.
(1) A protective coating comprising
   100 parts by weight of a synthetic resin solid content (A); and
   0.01 to 10 parts by weight of a mixture of
   (B-1) 10 to 90% by weight of at least one member selected from
      an acetylene glycol represented by the following general formula (1): 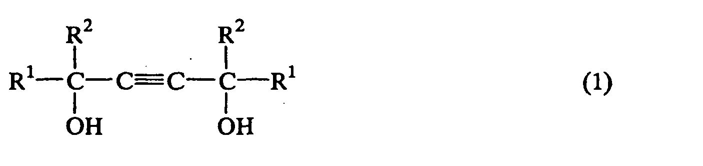 wherein R¹ and R² are respectively an alkyl group containing 1 to 5 carbon atoms,
      an ethylene oxide - propylene oxide block adduct of an acetylene glycol represented by the following general formula (2): 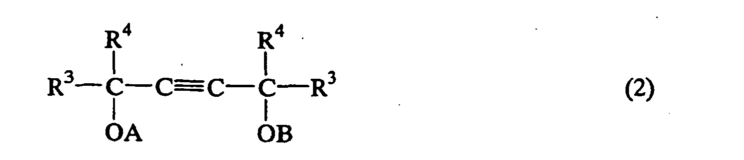 wherein R³ and R⁴ are respectively an alkyl group containing 1 to 5 carbon atoms; A
      is -(C₂H₄O)_{w1}-(C₃H₆O)ₓ₁-(C₂H₄O)_{y1}-(C₃H₆O)_{z1} -H; and B is -(C₂H₄O)_{w2}-(C₃H₆O)ₓ₂-(C₂H₄O)_{y2}-(C₃H₆O)_{z2} -H; wherein w1, w2, x1, x2, y1, y2, z1, and z2 are respectively 0 or a positive number of 0.5 to 25, w1 + w2 + y1 + y2 is 0.5 to 50, x1 + x2 + z1 + z2 is 0.5 to 50, and w1 + w2 + x1 + x2 + y1 + y2 + z1 + z2 is 1 to 100); and
      an ethylene oxide - propylene oxide random adduct of an acetylene glycol represented by the following general formula (3): 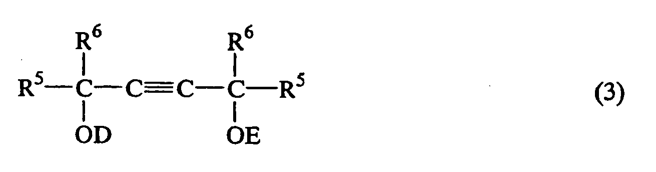 wherein R⁵ and R⁶ are respectively an alkyl group containing 1 to 5 carbon atoms; D
      is -(C₂H₄O/C₃H₆O)ₘ-H; and E is -(C₂H₄O/C₃H₆O)ₙ-H;
      wherein m and n are respectively 0 or a positive number of 0.5 to 50, and m + n is 1 to 100);
   (B-2) 10 to 90% by weight of at least one member selected from
      a polyoxyalkylene alkyl ether having an HLB of 8 to 18 represented by the following general formula (4):

      R⁷O(C₃H₆O)ᵥ(C₂H₄O)_{w}(C₃H₆O)ₓ(C₂H₄O)_{y}(C₃H₆O)_{z}H (4)

      wherein R⁷ is an alkyl group containing 1 to 20 carbon atoms; v, w, x, y, and z are respectively 0 or a positive number of 1 to 20; with the proviso v + w + x + y + z > 0; and
      sulfur-containing surfactants represented by the following general formula (5): 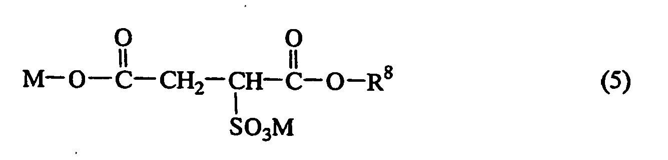 or general formula (6): 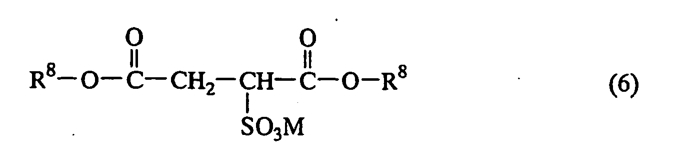 wherein M independently represents an alkali metal or ammonium group, R⁸ independently represents hydrogen atom or an alkyl group containing 1 to 20 carbon atoms; and
   (B-3) 0 to 25% by weight of water and/or a water soluble organic solvent.
(2) A protective coating according to the above (1) further comprising
   1 to 200 parts by weight of a filler (C).
(3) A protective coating according to the above (1) or (2) wherein the component (A) is at least one member selected from (meth)acrylate resin emulsion, styrene - acrylate copolymer emulsion, vinyl acetate resin emulsion, vinyl acetate - (meth)acrylate copolymer emulsion, urethane resin emulsion, ethylene - vinyl acetate copolymer emulsion, polyester resin, and aqueous epoxy resin.
(4) A protective coating according to any one of the above (1) to (3) wherein the component (B-1) has a sodium content of up to 1,000 ppm.
(5) A protective coating according to any one of claims 1 to 4 wherein the layer has a thickness of 1 to 100 µm.
(6) A protective coating according to the above (1) or (2) wherein the protective coating is used for a building material, a building exterior material, an automobile, or a glass fiber treatment.
The corresponding coating compositions, and methods comprising forming the coatings on substrates such as those specified above, are further aspects of this invention.

### EFFECTS

We find that the present protective coatings exhibit excellent corrosion
resistance and adhesion when applied on a building material or a building exterior material, and exhibit excellent protection of defect formation when applied on an automobile.

Protective coatings embodying the present invention exhibited excellent adhesion with no swelling or the like even if an oily substance such as an oil film were present on the surface of the material.

### FURTHER EXPLANATIONS; OPTIONS AND PREFERENCES

The protective coating containing an acetylene compound of the present invention comprises
100 parts by weight of a synthetic resin solid content (A); and
0.01 to 10 parts by weight of a mixture of
(B-1) 10 to 90% by weight of at least one member selected from
   an acetylene glycol represented by the following general formula (1): 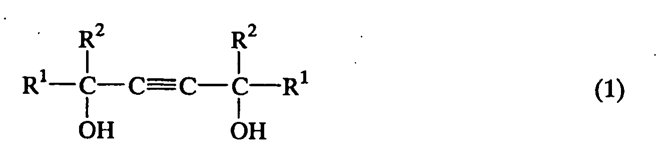 wherein R¹ and R² are respectively an alkyl group containing 1 to 5 carbon atoms,
   an ethylene oxide - propylene oxide block adduct of an acetylene glycol represented by the following general formula (2): 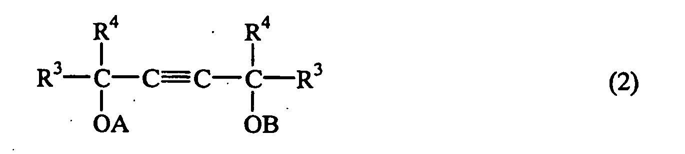 wherein R³ and R⁴ are respectively an alkyl group containing 1 to 5 carbon atoms; A
   is -(C₂H₄O)_{w1}-(C₃H₆O)ₓ₁-(C₂H₄O)_{y1}-(C₃H₆O)_{z1}-H; and B is -(C₂H₄O)_{w2}-(C₃H₆O)ₓ₂-(C₂H₄O)_{y2}-(C₃H₆O)_{z2}-H; wherein w1, w2, x1, x2, y1, y2, z1, and z2 are respectively 0 or a positive number of 0.5 to 25, w1 + w2 + y1 + y2 is 0.5 to 50, x1 + x2 + z1 + z2 is 0.5 to 50, and w1 + w2 + x1 + x2 + y1 + y2 + z1 + z2 is 1 to 100); and
   an ethylene oxide - propylene oxide random adduct of an acetylene glycol represented by the following general formula (3): 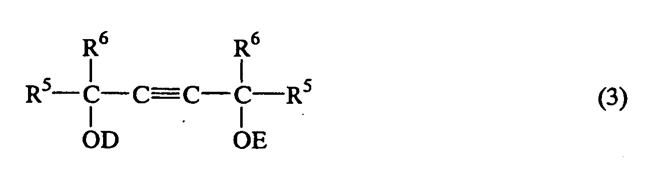 wherein R⁵ and R⁶ are respectively an alkyl group containing 1 to 5 carbon atoms; D
   is (C₂H₄O/C₃H₆O)ₘ-H; and E is -(C₂H₄O/C₃H₆O)ₙ-H;
   wherein m and n are respectively 0 or a positive number of 0.5 to 50, and m + n is 1 to 100);
(B-2) 10 to 90% by weight of at least one member selected from
   a polyoxyalkylene alkyl ether having an HLB of 8 to 18 represented by the following general formula (4):

   R⁷O(C₃H₆O)ᵥ(C₂H₄O)_{w}(C₃H₆O)ₓ(C₂H₄O)_{y}(C₃H₆O)_{z}H (4)

   wherein R⁷ is an alkyl group containing 1 to 20 carbon atoms; v, w, x, y, and z are respectively 0 or a positive number of 1 to 20; with the proviso v + w + x + y + z > 0; and
   sulfur-containing surfactants represented by the following general formula (5): 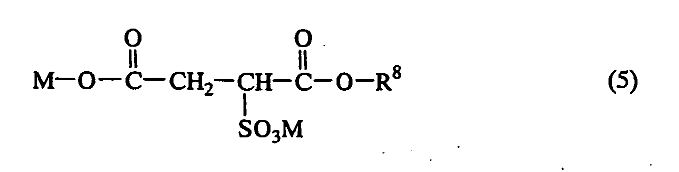 or general formula (6): 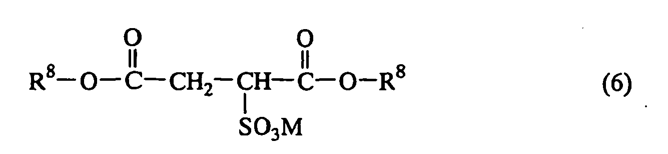 wherein M independently represents an alkali metal or ammonium group, R⁸ independently represents hydrogen atom or an alkyl group containing 1 to 20 carbon atoms; and
(B-3) 0 to 25% by weight of water and/or a water soluble organic solvent.

The main component constituting the coating composition for forming the protective coating of the present invention is the component (A), and this component (A) is preferably at least one member selected from (meth)acrylate resin emulsion, styrene - acrylate copolymer emulsion, vinyl acetate resin emulsion, vinyl acetate - (meth)acrylate copolymer emulsion, urethane resin emulsion, ethylene - vinyl acetate copolymer emulsion, polyester resin, and water soluble epoxy resin. Among these, the preferred in view of versatility and cost are (meth)acrylate resin emulsion, styrene - acrylate copolymer emulsion, vinyl acetate resin emulsion, and vinyl acetate - (meth)acrylate copolymer emulsion. The resin may be either the one produced by emulsion polymerization using a known polymerization method or a commercially available product. The emulsion used for the component (A) preferably has a solid content of 20 to 60% by weight, and more preferably, a solid content of 30 to 50% by weight.

The monomer containing an unsaturated group used for the component (A), and in particular, (meth)acrylate resin emulsion, styrene/acrylate copolymer emulsion, vinyl acetate resin emulsion, and vinyl acetate/(meth)acrylate copolymer emulsion is not particularly limited, and exemplary monomers include ethylene, propylene; vinyl carboxylate monomers such as vinyl acetate and vinyl propionate; aromatic vinyl monomers such as styrene and α-methylstyrene; conjugated diene monomers such as 1,3-butadiene and 2-methyl-1,3-butadiene; ethylenically unsaturated monocarboxylate esters such as methyl acrylate, ethyl acrylate, butyl acrylate, 2-ethylhexyl acrylate, and methyl methacrylate; ethylenically unsaturated dicarboxylate esters such as dimethyl itaconate, diethyl maleate, monobutyl maleate, monoethyl fumarate, and dibutyl fumarate; ethylenically unsaturated monocarboxylic acids such as acrylic acid, methacrylic acid, and crotonic acid; ethylenically unsaturated dicarboxylic acids such as itaconic acid, maleic acid, and fumaric acid; epoxy group-containing monomers such as glycidyl methacrylate; alcohol group-containing monomers such as 2-hydroxyethyl methacrylate; alkoxyl group-containing monomers such as methoxyethyl acrylate; nitrile group-containing monomers such as acrylonitrile; amide group-containing monomer such as acrylamide; amino group-containing monomer such as dimethylaminoethyl methacrylate; and a monomer containing two or more ethylenically unsaturated groups such as divinylbenzene and allylmethacrylate. The emulsion polymerization may be conducted by using such monomers.

The emulsion polymerization may be accomplished by any emulsion polymerization method known in the art. The unsaturated group-containing monomer and other polymerization aids (such as an emulsifying agent such as alkyl sulfate ester salt, a polymerization initiator such as ammonium sulfate, a pH adjusting agent such as sodium carbonate, and various antifoaming agents) may be added at once at the initial stage of the reaction; continuously in the course of the reaction; or intermittently or in divided dose during the polymerization.

The emulsifying agent used in such emulsion polymerization include the surfactants as described in the following (1) to (4), and such surfactant may be used either alone or in combination of two or more.
(1) Anionic surfactant
   Surfactants such as alkyl sulfate ester salt, polyoxyethylene alkyl ether sulfate ester salt, alkyl benzene sulfonate, alkyl diphenyl ether disulfonate, alkyl naphthalene sulfonate, fatty acid salt, dialkyl sulfosuccinates salt, alkyl phosphate ester salt, and polyoxyethylene alkylphenyl phosphate ester salt.
(2) Nonionic surfactant
   Surfactant such as polyoxyethylene alkylphenyl ether, polyoxyethylene alkyl ether, polyoxyethylene fatty ester, sorbitan fatty acid ester, polyoxyethylene sorbitan fatty acid ester, polyoxyalkylene alkyl ether, polyoxyethylene derivative, glycerin fatty acid ester, polyoxyethylene hydrogenated castor oil, polyoxyethylene alkylamine, alkyl alkanol amide, or acetylene alcohol, acetylene glycol, and their ethylene oxide adduct.
(3) Cationic surfactant
   Surfactant such as alkyltrimethyl ammonium chloride, dialkyl dimethyl ammonium chloride, alkyl benzyl ammonium chloride, and alkylamine salt.
(4) Polymerizable surfactant having a radically polymerizable double bond in its molecule, for example, alkylallyl sulfosuccinate salt, methacryloyl polyoxyalkylene sulfate salt, and polyoxyethylene nonylpropenylphenyl ether sulfate salt.

Such surfactant may be used at an amount of 0.3 to 20 parts by weight, and preferably at 0.5 to 10 parts by weight in relation to the unsaturated group-containing monomer.

The polymerization initiator used in such emulsion polymerization include persulfates such as ammonium persulfate and potassium persulfate; azo compounds such as 2,2'-diamidino-2,2'-azopropane dihydrochloride and azobisisobutyronitrile; and peroxides such as cumene hydroperoxide, benzoyl peroxide, and hydrogen peroxide. The polymerization initiator used may also be a known redox initiator, for example, potassium persulfuric and sodium hydrogen sulfite. Such polymerization initiator may be used at an amount of 0.1 to 5 parts by weight, and preferably at 0.2 to 2 parts by weight in relation to the unsaturated group-containing monomer.

The temperature used for the emulsion polymerization is generally 10 to 90°C, and preferably 50 to 80°C. The time used for the polymerization is 3 to 20 hours. The polymerization is preferably conducted in an inert atmosphere such as nitrogen gas.

Of the mixture incorporated in the coating composition for forming the protective coating of the present invention, the component (B-1) is at least one acetylene glycol or its adduct selected from the acetylene glycols represented by the general formula (1) and alkylene oxide adducts of the acetylene glycol represented by the general formula (2) and (3). 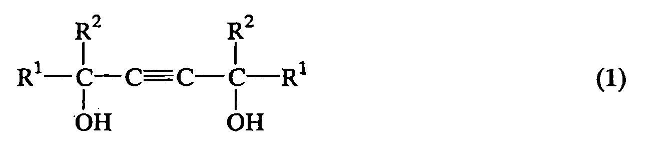 In the formula, R¹ and R² are respectively an alkyl group containing 1 to 5 carbon atoms. 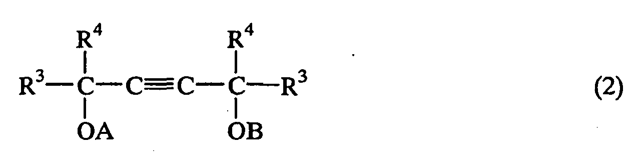 In the formula, R³ and R⁴ are respectively an alkyl group containing 1 to 5 carbon atoms; A
is -(C₂H₄O)_{w1}-(C₃H₆O)ₓ₁-(C₂H₄O)_{y1}-(C₃H₆O)_{z1}-H; and B
is -(C₂H₄O)_{w2}-(C₃H₆O)ₓ₂-(C₂H₄O)_{y2}-(C₃H₆O)_{z2}-H, wherein w1, w2, x1, x2, y1, y2, z1, and z2 are respectively 0 or a positive number of 0.5 to 25; w1 + w2 + y1 + y2 is 0.5 to 50, preferably 2.5 to 42.5, and more preferably 5 to 42.5; x1 + x2 + z1 + z2 is 0.5 to 50, preferably 2.5 to 42.5, and more preferably 2.5 to 42.5; and w1 + w2 + x1 + x2 + y1 + y2 + z1 + z2 is 1 to 100, preferably 5 to 85, and more preferably 10 to 85. 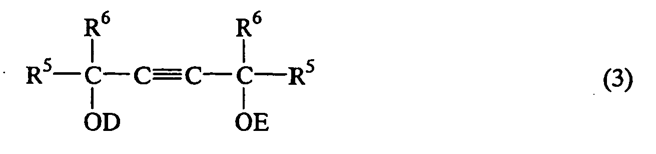 In the formula, R⁵ and R⁶ are respectively an alkyl group containing 1 to 5 carbon atoms; D is -(C₂H₄O/C₃H₆O)ₘ-H; and E is -(C₂H₄O/C₃H₆O)ₙ-H, wherein m and n are respectively 0 or a positive number of 0.5 to 50, and preferably 2.5 to 42.5, and m + n is 1 to 100, and preferably 5 to 85.

Exemplary acetylene glycols represented by the general formula (1) include
2,5,8,11-tetramethyl-6-dodecyne-5,8-diol,
5,8-dimethyl-6-dodecyne-5,8-diol,
2,4,7,9-tetramethyl-5-decyne-4,7-diol,
4,7-dimethyl-5-decyne-4,7-diol,
2,3,6,7-tetramethyl-4-octyne-3,6-diol,
3,6-dimethyl-4-octyne-3,6-diol, and
2,5-dimethyl-3-hexyne-2,5-diol.

Examples of the ethylene oxide - propylene oxide block adduct of the acetylene glycol represented by the general formula (2) include:
alkylene oxide adduct of 2,5,6,11-tetramethyl-6-dodecyne-5,8-diol (molar number of the ethylene oxide added: 10, molar number of the propylene oxide added: 40, w1 = 2 moles, w2 = 2 moles, x1 = 8 moles, x2 = 8 moles, y1 = 3 moles, y2 = 3 moles, z1 = 12 moles, z2 = 12 moles),
alkylene oxide adduct of 2,5,8,11-tetramethyl-6-dodecyne-5,8-diol (molar number of the ethylene oxide added: 40, molar number of the propylene oxide added: 10, w1 = 20 moles, w2 = 20 moles, x1 = 5 moles, x2 = 5 moles, y1, y2, z1, z2 = 0 mole),
alkylene oxide adduct of 5,8-dimethyl-6-dodecyne-5,8-diol (molar number of the ethylene oxide added: 20, molar number of the propylene oxide added: 20, w1 = 7 moles, w2 = 7 moles, x1 = 10 moles, x2 = 10 moles, y1 = 3 moles, y2 = 3 moles, z1, z2 = 0 mole),
alkylene oxide adduct of 5,8-dimethyl-6-dodecyne-5,8-diol (molar number of the ethylene oxide added: 20, molar number of the propylene oxide added: 20, w1, w2 = 0 mole, x1 = 10 moles, x2 = 10 moles, y1 = 10 moles, y2 = 10 moles, z1, z2 = 0 mole),
alkylene oxide adduct of 2,4,7,9-tetramethyl-5-decyne-4,7-diol (molar number of the ethylene oxide added: 20, molar number of the propylene oxide added: 10, w1 = 3 moles, w2 = 3 moles, x1 = 1 mole, x2 = 1 mole, y1 = 7 moles, y2 = 7 moles, z1 = 4 moles, z2 = 4 moles),
alkylene oxide adduct of 2,4,7,9-tetramethyl-5-decyne-4,7-diol (molar number of the ethylene oxide added: 20, molar number of the propylene oxide added: 10, w1 = 10 moles, w2 = 10 moles, x1 = 5 moles, x2 = 5 moles, y1, y2, z1, z2 = 0 mole),
alkylene oxide adduct of 4,7-dimethyl-5-decyne-4,7-diol (molar number of the ethylene oxide added: 30, molar number of the propylene oxide added: 6, w1 = 7 moles, w2 = 7 moles, x1 = 3 moles, x2 = 3 moles, y1 = 8 moles, y2 = 8 moles, z1, z2 = 0 mole),
alkylene oxide adduct of 4,7-dimethyl-5-decyne-4,7-diol (molar number of the ethylene oxide added: 30, molar number of the propylene oxide added: 6, w1, w2 = 0 mole, x1 = 1 mole, x2 = 1 mole, y1 = 15 moles, y2 = 15 moles, z1 = 2 moles, z2 = 2 moles),
alkylene oxide adduct of 2,3,6,7-tetramethyl-4-octyne-3,6-diol (molar number of the ethylene oxide added: 8, molar number of the propylene oxide added: 4, w1 = 2 moles, w2 = 2 moles, x1 = 1 mole, x2 = 1 mole, y1 = 2 moles, y2 = 2 moles, z1 = 1 mole, z2 = 1 mole),
alkylene oxide adduct of 3,6-diethyl-4-octyne-3,6-diol (molar number of the ethylene oxide added: 24, molar number of the propylene oxide added: 18, w1 = 5 moles, w2 = 5 moles, x1 = 9 moles, x2 = 9 moles, y1 = 7 moles, y2 = 7 moles, z1, z2 = 0 mole),
alkylene oxide adduct of 3,6-dimethyl-4-octyne-3,6-diol (molar number of the ethylene oxide added: 36, molar number of the propylene oxide added: 26, w1 = 10 moles, w2 = 10 moles, x1 = 5 moles, x2 = 5 moles, y1 = 8 moles, y2 = 8 moles, z1 = 8 moles, z2 = 8 moles),
   and
alkylene oxide adduct of 2,5-dimethyl-3-hexyne-2,5-diol (molar number of the ethylene oxide added: 44, molar number of the propylene oxide added: 40, w1 = 8 moles, w2 = 8 moles, x1 = 4 moles, x2 = 4 moles, y1 = 14 moles, y2 = 14 moles, z1 = 16 moles, z2 = 16 moles)

Examples of the ethylene oxide - propylene oxide random adduct of the acetylene glycol represented by the general formula (3) include:
alkylene oxide adduct of 2, 5, 8, 11-tetramethyl-6-dodecyne-5,8-diol (molar number of the ethylene oxide added: 20, molar number of the propylene oxide added: 20, m = 20 moles, n = 20 moles),
alkylene oxide adduct of 5,8-dimethyl-6-dodecyne-5,8-diol (molar number of the ethylene oxide added: 10, molar number of the propylene oxide added: 10, m = 12 moles, n = 8 moles),
alkylene oxide adduct of 2,4,7,9-tetramethyl-5-decyne-4,7-diol (molar number of the ethylene oxide added: 15, molar number of the propylene oxide added: 15, m = 13 moles, n = 17 moles),
alkylene oxide adduct of 4,7-dimethyl-5-decyne-4,7-diol (molar number of the ethylene oxide added: 27, molar number of the propylene oxide added: 27, m = 27 moles, n = 27 moles),
alkylene oxide adduct of 2,3,6,7-tetramethyl-4-octyne-3,6-diol (molar number of the ethylene oxide added: 2.5, molar number of the propylene oxide added: 2.5, m = 2.5 moles, n = 2.5 moles),
alkylene oxide adduct of 3,6-diethyl-4-octyne-3,6-diol (molar number of the ethylene oxide added: 21, molar number of the propylene oxide added: 21, m = 20 moles, n = 22 moles),
alkylene oxide adduct of 3,6-dimethyl-4-octyne-3,6-diol (molar number of the ethylene oxide added: 31, molar number of the propylene oxide added: 31, m = 27 moles, n = 35 moles), and
alkylene oxide adduct of 2,5-dimethyl-3-hexyne-2,5-diol (molar number of the ethylene oxide added: 42, molar number of the propylene oxide added: 42, m = 42 moles, n = 42 moles)

Total molar number of the alkylene oxide added in the general formulae (2) and (3) is 1 to 100 moles, preferably 5 to 85 moles, and more preferably 10 to 85 moles. When the molar number of the alkylene oxide unit added exceeds 100 moles, the compound will have an increased hydrophilicity which results in the decrease of affinity with the metal. This invites loss of adhesion and water resistance.

Total molar number of the ethylene oxide added in the general formulae (2) and (3) is preferably 0.5 to 50 moles, and more preferably 10 to 40 moles, and the molar number of the propylene oxide added is preferably 0.5 to 50 moles, and more preferably 10 to 40 moles. When the total molar number of the ethylene oxide added exceeds 50 moles, bubbling may occur to invite increase in the number of pin holes in the resulting coating. The total molar number of less than 0.5 moles may invite loss of miscibility in the preparation of the coating composition. In the meanwhile, when molar number of the propylene oxide added exceeds 50 moles, solubility will be reduced and this may invite aggregation of the composition. The total molar number of less than 0.5 moles may invite loss of miscibility in the preparation of the coating composition.

The component (B-1) may preferably have a sodium content of up to 1,000 ppm (0 to 1,000 ppm), and in addition, a potassium content of up to 2,000 ppm (0 to 2,000 ppm). More preferably, the component (B-1) may have a sodium content of 100 to 800 ppm. Use of the component (B-1) with the sodium content less than such amount will prevent loss of rust preventive properties and water resistance. The sodium content and the potassium content may be controlled to such range, for example, by purification of the acetylene glycol, use of highly purified starting materials, and synthesis of the acetylene glycol in a production environment that will prevent contamination of the metal.

The component (B-1) included the mixture has a hydrophobic group in its structure, and the composition is less likely to entrain water, and accordingly, the coating exhibits excellent water resistance.

The acetylene glycol or its adduct [component (B-1)] as described above may be used alone or in combination of two or more, and in preparing the protective coating of the present invention, the component (B-1) may be used at an amount of 10 to 90% by weight, and preferably at 20 to 80% by weight in relation to the total of the components (B-1) and (B-2) and the component (B-3) as described below. When this amount exceeds 90% by weight, solubility in water may become insufficient when used in preparing an aqueous coating composition, and when used at an amount of less than 10% by weight, bubbling may occur in the formation of the protective coating and this may invite defects such as increase in the number of pin holes formed in the resulting layer.

In the meanwhile, the component (B-2) is at least one member selected from
a polyoxyalkylene alkyl ether having an HLB of 8 to 18 represented by the following general formula (4):

R⁷O(C₃H₆O)ᵥ(C₂H₄O)_{w}(C₃H₆O)ₓ(C₂H₄O)_{y}(C₃H₆O)_{z}H (4)

wherein R⁷ is an alkyl group containing 1 to 20 carbon atoms; v, w, x, y, and z are respectively 0 or a positive number of 1 to 20; with the proviso that (v + w + x + y + z) is a positive number of greater 0 and preferably 1 to 80; and
sulfur-containing surfactants represented by the following general formula (5): 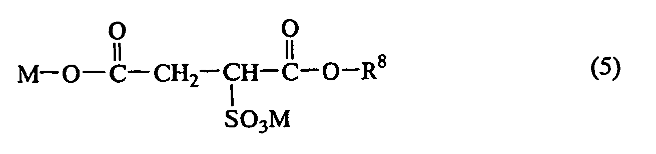 or general formula (6): 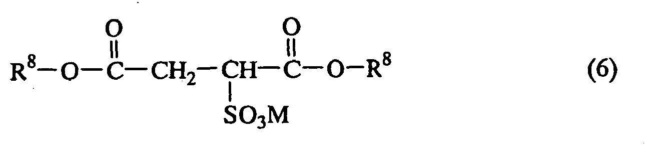 wherein M independently represents an alkali metal or ammonium group, R⁸ independently represents hydrogen atom or an alkyl group containing 1 to 20 carbon atoms

The polyoxyalkylene ether of the component (B-2) blended with the acetylene glycol or its adduct of the component (B-1) may be the polyoxyalkylene alkyl ether represented by the general formula (4), and examples include:
C₁₂H₂₅O (C₂H₄O)₆(C₃H₆O)₂(C₂H₄O)₆ (C₃H₆O)₈H,
C₁₃H₂₇O (C₂H₄O)₆(C₃H₆O)₂(C₂H₄O)₆ (C₃H₆O)₈H,
C₁₂H₂₅O(C₂H₄O)_{w}(C₃H₆O)ₓ(C₂H₄O)_{y}(C₃H₆O)_{z}H (wherein w + y = 15 , x + z = 4),
C₁₃H₂₇O(C₂H₄O)_{w}(C₃H₆O)ₓ(C₂H₄O)_{y}(C₃H₆O)_{z}H (wherein w + y = 15 , x + z = 4),
C₁₂H₂₅O (C₂H₄O)₈(C₃H₆O)₂(C₂H₄O)₆H, C₁₃H₂₇O(C₂H₄O)₈(C₃H₆O)₂(C₂H₄O)₆H,
C₁₃H₂₇O (C₂H₄O)₈(C₃H₆O)₂(C₂H₄O)₆H, C₁₂H₂₅O (C₂H₄O)₁₂ (C₃H₆O)₂(C₂H₄O)₁₂H,
C₁₃H₂₇O(C₂H₄O)₁₂(C₃H₆O)₂ (C₂H₄O)₁₂H,
CH₃(CH₂)₉(CH₃)CHO(C₂H₄O)₇(C₃H₆O)_{4.5}H,
CH₃(CH₂)₁₁(CH₃)CHO(C₂H₄O)₇(C₃H₆O)_{4.5}H,
CH₃(CH₂)₉(CH₃)CHO(C₂H₄O)₅(C₃H₆O)_{3.5}H,
CH₃(CH₂)₁₁(CH₃)CHO(C₂H₄O)₅(C₃H₆O)_{3.5}H, C₁₄H₂₉O(C₂H₄O)₁₄ (C₃H₆O)₂H,
C₁₄H₂₉O (C₂H₄O) ₁₄ (C₃H₆O)₂H, C₁₆H₃₃O(C₃H₆O)₄ (C₂H₄O)
C₁₆H₃₃O (C₃H₆O)₄(C₂H₄O)₁₀H, C₁₆H₃₃O(C₃H₆O)₄(C₂H₄O)₂₀H,
C₁₆H₃₃O(C₃H₆O)₈(C₂H₄O)₂₀H, C₁₈H₃₇O(C₃H₆O)₂₀(C₂H₄O)_{1.5}H,
C₁₆H₃₃O(C₃H₆O)₄(C₂H₄O)₁₀(C₃H₆O)₄(C₂H₄O)₁₀H, and
C₁₆H₃₃O(C₃H₆O)₄(C₂H₄O)₁₉(C₃H₆O)₄H,
which may be used alone or in combination of two or more. When the component (B-2) has an HLB of less than 8, solubility in water will be insufficient, while the HLB in excess of 18 may result in an inconsistent coating.

Examples of the sulfur containing surfactants represented by the general formulae (5) and (6) include sodium n-hexylsulfosuccinate, sodium dihexylsulfosuccinate, sodiumdioctylsulfosuccinate,
sodium di(2-ethylhexyl)sulfosuccinate,
potassium di(2-ethylhexyl)sulfosuccinate,
sodium diamylsulfosuccinate,
sodium 1,3-dimethylethylsulfosuccinate,
ammonium di(2-ethylhexyl)sulfosuccinate, and
sodium 1,3-dimethyl butylsulfosuccinate.

The exemplary compounds of component (B-2) as described above may be used alone or in combination of two or more.

Amount of the component (B-2) used in preparing the surfactant composition of the present invention is 10 to 90% by weight, and preferably 20 to 80% by weight of the total amount of the components (B-1) and (B-2) and the component (B-3) as described below. When the content of the component (B-2) is less than 10% by weight, solubilization of the component (B-1) may be insufficient. On the other hand, content in excess of 90% by weight may result in foaming, and this may invite increase in the number of pin holes formed in the resulting coating.

In present invention, the component (B-1) and the component (B-2) are preferably used so that the total of the components (B-1) and (B-2) constitutes 100% by weight. However, the coating composition of the present invention may also include pure water or a water soluble organic solvent such as ethyleneglycol, diethylene glycol, triethylene glycol, tetraethylene glycol, polyethylene glycol, propylene glycol, dipropylene glycol, 1,3-propanediol, 1,4-butanediol, or glycerin as the component (B-3). This component (B-3) may be used to constitute 0 to 25% by weight, and preferably 5 to 20% by weight of the total amount of the components (B-1), (B-2), and (B-3) as long as such inclusion does not adversely affect the properties of the coating composition for forming the protective coating of the present invention.

As described above, the mixture of the components (B-1), (B-2), and (B-3) may be incorporated at 0.01 to 10 parts by weight, preferably at 0.1 to 5 parts by weight, and more preferably at 0.2 to 2 parts by weight in relation to 100 parts by weight of the solid content of the component (A). Incorporation of the mixture at an excessively low content may invite a coating failure, for example, by the repelling of the coating composition. On the other hand, incorporation of the mixture at an excessive amount may also invite coating failure due to increase in the bubbling.

The filler which is component (C) in the coating composition of the present invention is preferably at least one member selected from titanium, talc, kaolin, bentonite, mica, silica, heavy calcium carbonate, clay, precipitated barium sulfate, barium carbonate, glass beads, and resin beads.

The component (C) is used at an amount of 0 to 200 parts by weight and particularly at 1 to 200 parts by weight, and preferably at 5 to 150 parts by weight, and most preferably at 10 to 100 parts by weight in relation to 100 parts by weight of the solid content of the component (A). When the amount of component (C) is excessively low, the time required for drying of the coating will be unduly long, while an excessively high content of the component (C) may results in poor elongation rate of the coating, and the resulting coating may have a reduced strength.

The coating composition of the present invention for producing the protective coating of the present invention is produced by mixing the components as described above, for example, by a mixing method known in the art using a propeller blender. If desired, the component which is solid at room temperature may be added after heating.

The coating composition may also have additives such as humectant, dispersant, antifoaming agent, film forming aid, antifreeze agent, leveling agent, surfactant, light stabilizer, and antiseptic at an amount that does not adversely affect the performance of the composition.

The resulting composition is coated on a material such as a building material, building exterior material, an automobile, and a material treated with a glass fiber to a thickness of 1 to 100 µm, and preferably 2 to 50 µm by a roll coater, a brush, a slit die coater, a knife coater, a spray coater, a curtain coater, or the like, and dried at an elevated temperature to thereby produce the protective coating. The surface of the material to which the composition is applied may be preliminarily treated. The drying with heating is preferably conducted at a temperature of 105 to 160°C.

### EXAMPLES

Next, the present invention is described in further detail by referring to the Examples and Comparative Examples which by no means limit the scope of the present invention. The parts and % in the Examples indicate parts by weight and % by weight, respectively.

### Examples and Comparative Examples

Amount of the components (B-1), (B-2), and (B-3) blended are shown in Table 1.

### <Mix of (B-1) and (B-2)>

**Table 1**

| Amount (% by weight) | Example | | | | | | | | Comparative Example | | | | | | |
|---|---|---|---|---|---|---|---|---|---|---|---|---|---|---|---|
| | M-1 | M-2 | M-3 | M-4 | M-5 | M-6 | M-7 | M-8 | M-9 | M-10 | M-11 | M-12 | M-13 | M-14 | M-15 |
| Component (B-1) | | | | | | | | | | | | | | | |
| Na content (ppm) | 500 | 700 | 500 | 700 | 500 | 1.200 | 500 | 700 | 500 | 500 | 500 | 700 | 500 | 500 | 500 |
| B-1-1 | 40 | | | | 55 | | 40 | | 40 | 60 | 5 | | | 60 | 5 |
| B-1-2 | | 30 | | | | | | | | | | 95 | | | |
| B-1-3 | | | 20 | | | | | | | | | | | | |
| B-1-4 | | | | 40 | | | | 30 | | | | | | | |
| B-1-4' | | | | | | 40 | | | | | | | | | |
| B-1-5 | | | | | | | | | | | | | 40 | | |

| Component (B-2) | | | | | | | | | | | | | | | |
|---|---|---|---|---|---|---|---|---|---|---|---|---|---|---|---|
| B-2-1 | 40 | | 80 | | | | | | | | | | 40 | | |
| B-2-2 | | 50 | | 60 | | 60 | | | | | 95 | 5 | | | |
| B-2-3 | | | | | | | | | 60 | | | | | | |
| B-2-4 | | | | | | | | | | 40 | | | | | |
| B-2-5 | | | | | 45 | | | | | | | | | | |
| B-2-6 | | | | | | | | | | | | | | 40 | |
| B-2-7 | | | | | | | 40 | | | | | | | | 95 |
| B-2-8 | | | | | | | | 70 | | | | | | | |

| Component (B-3) | | | | | | | | | | | | | | | |
|---|---|---|---|---|---|---|---|---|---|---|---|---|---|---|---|
| EG | 20 | | | | | | | | | | | | | | |
| PG | | 20 | | | | | | | | | | | | | |
| Pure water | | | | | | | | | | | | | 20 | | |

### Component (B-1)

- B-1-1:: 2,4,7,9-tetramethyl-5-decyne-4,7-diol,
- B-1-2:: alkylene oxide adduct of 2,4,7,9-tetramethyl-5-decyne-4,7-diol (molar number of the ethylene oxide added: 20, molar number of the propylene oxide added: 10, w1 = 3 moles, w2 = 3 moles, x1 = 1 mole, x2 = 1 mole, y1 = 7 moles, y2 = 7 moles, z1 = 4 moles, z2 = 4 moles),
- B-1-3:: alkylene oxide adduct of 2,4,7,9-tetramethyl-5-decyne-4,7-diol (molar number of the ethylene oxide added: 15, molar number of the propylene oxide added: 15, m = 13 moles, n = 17 moles),
- B-1-4:: alkylene oxide adduct of 2,5-dimethyl-3-hexyne-2,5-diol (molar number of the ethylene oxide added: 42, molar number of the propylene oxide added: 42, m = 42 moles, n = 42 moles),
- B-1-4' :: A comound having a composition the same as that of B-1-4,B-1-5: alkylene oxide adduct of 2,5,8,11-tetramethyl-6-dodecyne-5,8-diol (molar number of the ethylene oxide added: 60, molar number of the propylene oxide added: 60, m = 60 moles, n = 60 moles).

### Component (B-2)

- B-2-1:: Noigen ET-116B (product name; manufactured by Dai-Ichi Kogyo Seiyaku Co.,Ltd.; R⁷O(C₂H₄O)_{w}(C₃H₆O)ₓH wherein R⁷ is an alkyl containing 12 or 14 carbon atoms, w is 7, and x is 4.5; HLB, 12.0),
- B-2-2:: Noigen DL-0415 (product name; manufactured by Dai-Ichi Kogyo Seiyaku Co.,Ltd.;
R⁷O(C₂H₄O)_{w}(C₃H₆O)ₓ(C₂H₄O)_{y}(C₃H₆O)_{z}H, wherein R⁷ is an alkyl containing 12 or 13 carbon atoms, w + y is 15, and x + z is 4; HLB, 15.0),
- B-2-3:: Noigen YX-400 (product name; manufactured by Dai-Ichi Kogyo Seiyaku Co., Ltd.; R⁷O(C₂H₄O)_{w}H, wherein R⁷ is an alkyl containing 12 carbon atoms, and w is 40; HLB, 18.1),
- B-2-4:: Noigen DH-0300 (product name; manufactured by Dai-Ichi Kogyo Seiyaku Co.,Ltd.; R⁷O(C₂H₄O)_{w}H, wherein R⁷ is an alkyl containing 14 carbon atoms, and w is 2; HLB, 4.0),
- B-2-5:: Nikkol PBC-33 (product name; manufactured by Nikko Chemicals; CH₃(CH₂)₁₄CH₂O(C₃H₆O)₄(C₂H₄O)₁₀H; HLB, 10.5),
- B-2-6:: Nikkol PEN4630 (product name; manufactured by Nikko Chemicals, C₂₄H₄₉(C₃H₆O)₆(C₂H₄O)₃₀H; HLB, 12.0),
- B-2-7:: sodium di(2-ethylhexyl)sulfosuccinate,
- B-2-8:: potassium di(2-ethylhexyl)sulfosuccinate.

### Component (B-3)

- EG:: ethyleneglycol
- PG:: propylene glycol

Na was quantitatively determined by ICP emission spectrophotometer (IRIS Intorepid II XSP).

### [Preparation of the coating composition for the protective coating].

50 parts of Vinyblan 2583 (product name of an acryl emulsion manufactured by Nissin Chemical Industry Co., Ltd., solid content, 45%), 30 parts of the filler paste as described below, 15 parts of ion exchanged water, 4 parts of 5% aqueous solution of adipic acid dihydrazide, and 1 part of the mix (M-1 to M-15) were mixed to produce the protective coating for evaluation.

### [Preparation of filler paste (component (C)]

70 parts of titanium dioxide (Typaque R-780 manufactured by Ishihara Sangyo Kaisha Ltd.), 0.5 parts of antifoaming agent (Surfynol DF-58 manufactured by Air Products), 5 parts of pigment dispersant (Dispersant BYK-190 manufactured by BYK-Chemie GmbH ), and 24.5 parts of ion exchanged water were mixed, and dispersed with Disper to produce the pigment paste.

### [Preparation of the sample coated with the coating composition]

A zinc plated steel strip was selected for the evaluation in consideration of the automobile application. The coating composition was coated to a thickness (dry thickness) of 10 µm, and the coating was dried at 110°C for 10 minutes to thereby form the protective coating. This steel strip was designated Sample plate No. 1.

Among building exterior materials such as cement siding materials, aluminum siding materials, and iron siding materials, an aluminum siding material was selected for the evaluation in consideration of the use for a building exterior material. The coating composition was coated to a thickness (dry thickness) of 30 µm, and the coating was dried at 110°C for 10 minutes to thereby form the protective coating. This steel strip was designated Sample plate No. 2.

### [Evaluation of the performance of the composition and protective coating]

### Viscosity

The viscosity was measured by using a paddle viscometer (23°C).

### pH

The pH was measured according to JIS Z 8802 by using the sample with no further treatment.

### Rust preventive properties

The rust preventive properties were evaluated by salt spray test of the test plate according to JIS K 5600.

After the test, rust generation, adhesion, and appearance of the coating were evaluated by the following criteria:
- Ⓞ:: No rust observed at the cut. Adhesion of 100/100.
- ○:: Red rust at the cut of up to 5%.
- Δ:: Red rust at the cut of 6 to 20%.
- ×:: Red rust at the cut in excess of 20%.

### Adhesion

The adhesion was evaluated by crosscut test according to JIS K 5600.

The coating was observed after applying and peeling an adhesive tape, and the percentage of the non-peeled area is shown in the Table.

### Water resistance

The water resistance was evaluated by immersing the test plate which is the same as the one used for evaluating the adhesion in a warm water of 50°C for 10 days, and evaluating outer appearance of the coating (discoloration, swelling, peeling, etc.) and adhesion.
- Ⓞ:: No change in the outer appearance of the coating, with the adhesion of 100/100.
- ○:: Swelling at the cuts with the adhesion of 80/100 or higher.
- Δ:: Swelling at the cuts with the adhesion of 50/100 or higher.
- ×:: Swelling at the cuts with the adhesion of less than 50/100.

The results are shown in Table 2.

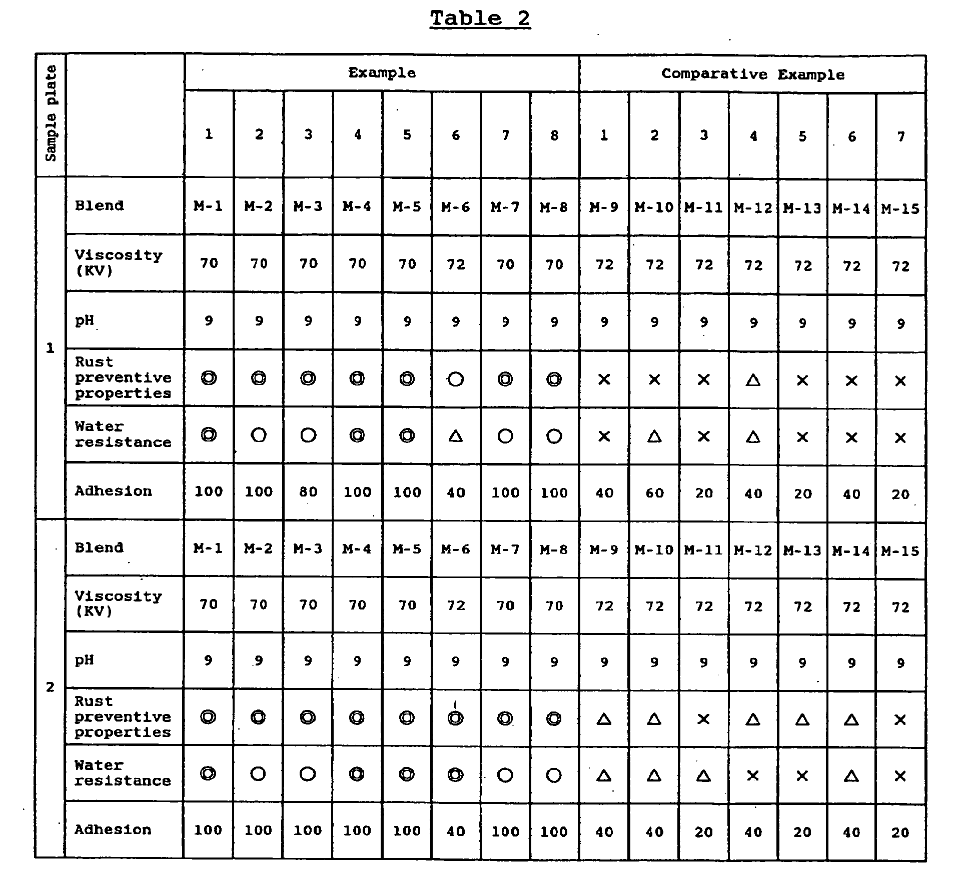

In respect of numerical ranges disclosed herein it will of course be understood that in the normal way the technical criterion for the upper limit is different from the technical criterion for the lower limit, i.e. the upper and lower limits are intrinsically distinct proposals.

## Claims

1. A protective coating made from
100 parts by weight of a synthetic resin solid content (A); and
0.01 to 10 parts by weight of a mixture of
(B-1) 10 to 90% by weight of at least one member selected from
acetylene glycols represented by the following general formula (1): 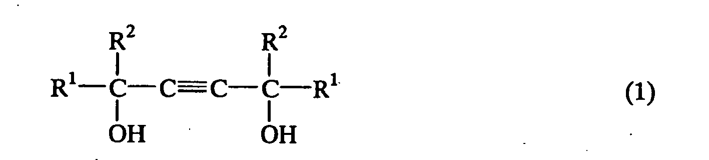 wherein R¹ and R² are respectively alkyl groups containing 1 to 5 carbon atoms,
ethylene oxide - propylene oxide block adducts of acetylene glycol, represented by the following general formula (2): 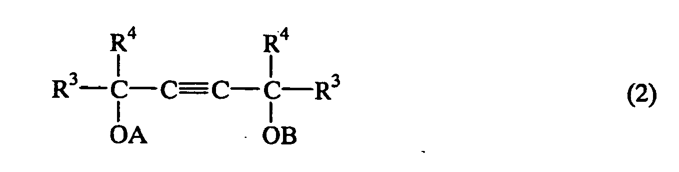 wherein R³ and R⁴ are respectively alkyl groups containing 1 to 5 carbon atoms; A
is -(C₂H₄O)_{w1}-(C₃H₆O)ₓ₁-(C₂H₄O)_{y1}-(C₃H₆O)_{z1}-H; and B is -(C₂H₄O)_{w2}-(C₃H₆O)ₓ₂-(C₂H₄O)_{y2}-(C₃H₆O)_{z2}-H; wherein w1, w2, x1, x2, y1, y2, z1, and z2 are respectively 0 or a positive number of 0.5 to 25, w1 + w2 + y1 + y2 is 0.5 to 50, x1 + x2 + z1 + z2 is 0.5 to 50, and w1 + w2 + x1 + x2 + y1 + y2 + z1 + z2 is 1 to 100); and
ethylene oxide - propylene oxide random adducts of acetylene glycol, represented by the following general formula (3): 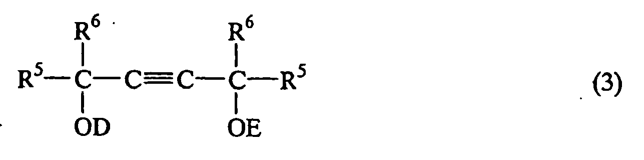 wherein R⁵ and R⁶ are respectively alkyl groups containing 1 to 5 carbon atoms; D
is -(C₂H₄O/C₃H₆O)ₘ-H; and E is -(C₂H₄O/C₃H₆O)ₙ-H; wherein m and n are respectively 0 or a positive number of 0.5 to 50, and m + n is 1 to 100);
(B-2) 10 to 90% by weight of at least one member selected from
polyoxyalkylene alkyl ethers having an HLB of 8 to 18 represented by the following general formula (4):
R⁷O(C₃H₆O)ᵥ(C₂H₄O)_{w}(C₃H₆O)ₓ(C₂H₄O)_{y}(C₃H₆O)_{z}H (4)
wherein R⁷ is an alkyl group containing 1 to 20 carbon atoms; v, w, x, y, and z are respectively 0 or a positive number of 1 to 20; with the proviso v + w + x + y + z > 0; and
sulfur-containing surfactants represented by the following general formulae (5) and (6): 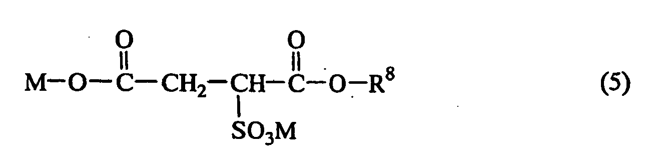 or general formula (6): 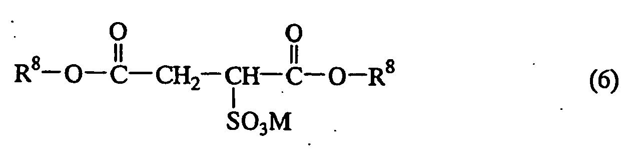 wherein M independently represents an alkali metal or ammonium group, R⁸ independently represents hydrogen atom or an alkyl group containing 1 to 20 carbon atoms; and
(B-3) 0 to 25% by weight of water and/or water soluble organic solvent.

2. A protective coating according to claim 1 further comprising
1 to 200 parts by weight of filler (C).

3. A protective coating according to claim 1 or 2 wherein the component (A) is at least one member selected from (meth)acrylate resin emulsion, styrene - acrylate copolymer emulsion, vinyl acetate resin emulsion, vinyl acetate - (meth)acrylate copolymer emulsion, urethane resin emulsion, ethylene - vinyl acetate copolymer emulsion, polyester resin, and aqueous epoxy resin.

4. A protective coating according to any one of claims 1 to 3 wherein the component (B-1) has a sodium content of up to 1,000 ppm.

5. A protective coating according to any one of claims 1 to 4 wherein the layer has a thickness of 1 to 100 µm.

6. A protective coating according to any one of claims 1 to 5 wherein the protective coating is used for a building material, a building exterior material, an automobile, or a glass fiber treatment.

7. A composition as defined in any one of claims 1 to 4, for forming a coating as claimed therein.

8. A method of making a coating as defined in any one of claims 1 to 6, comprising applying the corresponding composition to a substrate.

## Patentansprüche

1. Schutzbeschichtung, bestehend aus:
100 Gewichtsteilen eines Kunstharzes mit einem Feststoffgehalt (A); und 0,01 bis 10 Gewichtsteilen eines Gemischs aus
(B-1) 10 bis 90 Gew.-% zumindest eines Elements, das ausgewählt ist aus:
Acetylenglykolen der nachstehenden allgemeinen Formel (1): 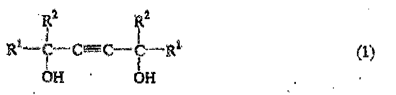 worin R¹ und R² jeweils Alkylgruppen mit 1 bis 5 Kohlenstoffatomen sind,
Ethylenoxid/Propylenoxid-Blockaddukten von Acetylenglykol der nachstehenden allgemeinen Formel (2): 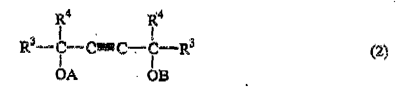 worin R³ und R⁴ jeweils Alkylgruppen mit 1 bis 5 Kohlenstoffatomen sind; A -(C₂H₄O)_{w1}-(C₃H₆O)ₓ₁-(C₂H₄O)_{y1}-(C₃H₆O)ₘ-H ist; und B -(C₂H₄O)_{w2}-(C₃H₆O)ₓ₂-(C₂H₄O)_{y2}-(C₃H₆O)_{z2}-H ist; worin w1, w2, x1, x2, y1, y2, z1 und z2 jeweils 0 oder eine positive Zahl von 0,5 bis 25 sind, w1+w2+y1+y2 = 0,5 bis 50 ist, x1+x2+z1+z2 = 0,5 bis 50 ist und w1+w2+x1+y1+y2+z1+z2 = 1 bis 100 ist; und
statistischen Ethylenoxid/Propylenoxid-Addukten von Acetylenglykol der nachstehenden allgemeinen Formel (3): 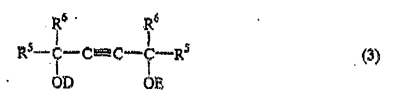 worin R⁵ und R⁶ jeweils Alkylgruppen mit 1 bis 5 Kohlenstoffatomen sind; D -(C₂H₄O/C₃H₆O)ₘ-H ist; und E -(C₂H₄O/C₃H₆O)ₙ-M ist; worin m und n jeweils 0 oder eine positive Zahl von 0,5 bis 50 sind und m+n = 1 bis 100 ist;
(B-2) 10 bis 90 Gew.-% zumindest eines Elements, das ausgewählt ist aus:
Polyoxyalkylenalkylethern der nachstehenden allgemeinen Formel (4) mit einem HLB-Wert von 8 bis 18:
R⁷O(C₃H₆O)ᵥ(C₂H₄O)_{w}(C₃H₆O)ₓ(C₂H₄O)_{y}(C₃H₆O)_{z}H (4)
worin R⁷ eine Alkylgruppe mit 1 bis 20 Kohlenstoffatomen ist; v, w, x, y und z jeweils 0 oder eine positive Zahl von 1 bis 20 sind; mit der Maßgabe, dass v+w+x+y+z > 0 ist; und
schwefelhältigen Tensiden der nachstehenden allgemeinen Formeln (5) und (6): 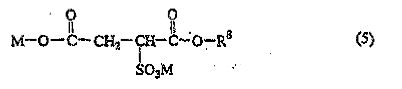 oder der allgemeinen Formel (6): 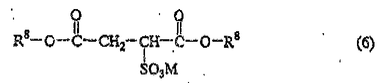 worin die M unabhängig voneinander für ein Alkalimetall oder eine Ammoniumgruppe stehen und die R⁸ unabhängig voneinander für ein Wasserstoffatom oder eine Alkylgruppe mit 1 bis 20 Kohlenstoffatomen stehen; und
(B-3) 0 bis 25 Gew.-% Wasser und/oder eines wasserlöslichen organischen Lösungsmittels.

2. Schutzbeschichtung nach Anspruch 1, weiters umfassend:
1 bis 200 Gewichtsteile eines Füllstoffs (C).

3. Schutzbeschichtung nach Anspruch 1 oder 2, worin die Komponente (A) zumindest ein aus der aus einer (Meth)acrylatharz-Emulsion, einer Styrol/Acrylat-Copolymer-Emulsion, einer Vinylacetatharz-Emulsion, Vinylacetat/(Meth)acrylat-Copolymer-Emulsion, einer Urethanharzemulsion, einer Ethylen/Vinylacetat-Copolymer-Emulsion, einem Polyesterharz und einem wässrigen Epoxyharz bestehenden Gruppe ausgewählter Vertreter ist.

4. Schutzbeschichtung nach einem der Ansprüche 1 bis 3, worin die Komponente (B-1) einen Natriumgehalt von bis zu 1.000 ppm aufweist.

5. Schutzbeschichtung nach einem der Ansprüche 1 bis 4, worin die Schicht eine Dicke von 1 bis 100 µm aufweist.

6. Schutzbeschichtung nach einem der Ansprüche 1 bis 5, worin die Schutzbeschichtung für ein Baumaterial, ein Außenbaumaterial, ein Kraftfahrzeug oder eine Glasfaserbehandlung eingesetzt wird.

7. Zusammensetzung nach einem der Ansprüche 1 bis 4 zur Bildung einer Beschichtung wie hierin beansprucht.

8. Verfahren zur Herstellung einer Beschichtung nach einem der Ansprüche 1 bis 6, umfassend das Aufbringen der entsprechenden Zusammensetzung auf ein Substrat.

## Revendications

1. Revêtement protecteur constitué de
100 parties en poids d'une teneur en solides de résine synthétique (A) ; et
0,01 à 10 parties en poids d'un mélange de
(B-1) 10 à 90 % en poids d'au moins un élément choisi parmi
des acétylène glycols représentés par la formule générale (1) suivante : 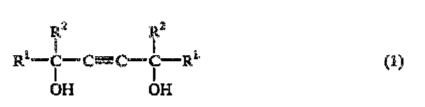 dans laquelle R¹ et R² sont respectivement des groupes alkyle contenant 1 à 5 atomes de carbone,
des produits d'addition séquencés d'oxyde d'éthylène-oxyde de propylène d'acétylène glycol, représentés par la formule générale (2) suivante : 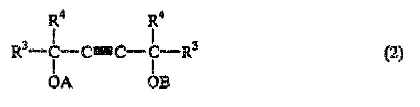 dans laquelle R¹ et R² sont respectivement des groupes alkyle contenant 1 à 5 atomes de carbone ; A est -(C₂H₄O)_{w1}-(C₃H₆O)_{X1}-(C₂H₄O)_{y1}-(C₃H₆O)_{z1}-H ; et B est - (C₂H₄O)_{w2}-(C₃H₆O)ₓ₂-(C₂H₄O)_{y2}-(C₂H₆O)_{z2}-H ; dans laquelle w1, w2, x1, x2, y1, y2, z1 et z2 sont respectivement 0 ou un nombre positif de 0,5 à 25, w1 + w2 + y1 + y2 vaut 0,5 à 50, x1 + x2 + z1 + z2 vaut 0,5 à 50, et w1 + w2 + x1 + x2 + y1 + y2 + z1 + z2 vaut 1 à 100 ; et
des produits d'addition statistiques d'oxyde d'éthylène-oxyde de propylène d'acétylène glycol, représentés par la formule générale (3) suivante : 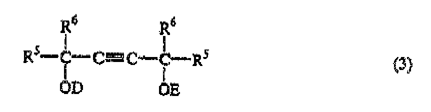 dans laquelle R⁵ et R⁶ sont respectivement des groupes alkyle contenant 1 à 5 atomes de carbone ; D est -(C₂H₄O/C₃H₆O)ₘ-H ; et E est -(C₂H₄O/C₃H₆O)ₙ-H ; dans laquelle m et n sont respectivement 0 ou un nombre positif de 0,5 à 50, et m + n vaut 1 à 100 ;
(B-2) 10 à 90 % en poids d'au moins un élément choisi parmi
les poly(oxyalkylène)alkyléthers ayant une valeur HLB de 8 à 18 représentés par la formule générale (4) suivante :
R⁷O(C₃H₆O)ᵥ(C₂H₄O)_{w}(C₃H₆O)ₓ(C₂H₄O)_{y}(C₃H₆O)_{z} (4)
dans laquelle R⁷ est un groupe alkyle contenant 1 à 20 atomes de carbone ; v, w, x, y et z sont respectivement 0 ou un nombre positif de 1 à 20 ; à condition que v+w+x+y+z>0 ; et des agents tensioactifs contenant du soufre représentés par les formules générales (5) et (6) suivantes ; 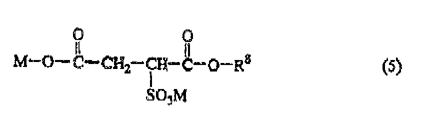 ou la formule générale (6) : 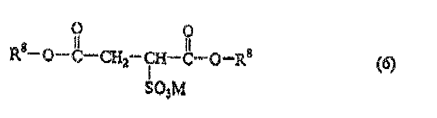 dans lesquelles M représente indépendamment un métal alcalin ou un groupe ammonium, R⁸ représente indépendamment un atome d'hydrogène ou un groupe alkyle contenant 1 à 20 atomes de carbone ; et
(B-3) 0 à 25 % en poids d'eau et/ou d'un solvant organique soluble dans l'eau.

2. Revêtement protecteur selon la revendication 1, comprenant en outre
1 à 200 parties en poids d'une charge (C).

3. Revêtement protecteur selon la revendication 1 ou 2, dans lequel le composant (A) est au moins un élément choisi parmi une émulsion de résine de (méth)acrylate, une emulsion de copolymère de styrène-acrylate, une émulsion de résine d'acétate de vinyle, une émulsion de copolymère d'acétate de vinyle-(méth)acrylate, une émulsion de résine d'uréthane, une émulsion de copolymère d'éthylène - acétate de vinyle, une résine de poly(ester) et une résine époxy aqueuse.

4. Revêtement protecteur selon l'une quelconque des revendications 1 à 3, dans lequel le composant (B-1) a une teneur en sodium allant jusqu'à 1 000 ppm.

5. Revêtement protecteur selon l'une quelconque des revendications 1 à 4, dans lequel la couche a une épaisseur de 1. à 100 µm.

6. Revêtement protecteur selon l'une quelconque des revendications 1 à 5, dans lequel le revêtement protecteur est utilisé pour un matériau de construction, un matériau de construction extérieur, une automobile ou un traitement de fibres de verre.

7. Composition selon l'une quelconque des revendications 1 à 4, destinée à former un revêtement tel que revendiqué dans celles-ci.

8. Procédé de préparation d'un revêtement tel que défini dans l'une quelconque des revendications 1 à 6, comprenant l'application de la composition correspondante à un substrat.
